# EUROPEAN PATENT APPLICATION

(11) **EP 2 482 233 A1**
(43) Date of publication of application: **01.08.2012**
(21) Application number: 12000400.7
(22) Date of filing: 22.12.2009
(51) Int. Cl.: G06K 9/62

(54) **Object recognition using global similarity-based classifier**

(30) Priority: 31.12.2008 US 347798
(62) Divisional of application: 09252867.8
(71) Applicant: Intel Corporation, Santa Clara, CA 95052 (US)
(72) Inventor: Rahimi, Ali, Berkeley, California 94704 (US)
(74) Representative: Beresford, Keith Denis Lewis

(57) **Abstract**

In some embodiments, object recognition using global similarity-based classifier is presented. In this regard, an apparatus is introduced comprising: a camera, a display, and a processor, the processor to: receive an image from the camera, convert the image to a numerical representation, compute a similarity function between the converted image and a plurality of prototype image representations, and classify the output of the similarity function to identify the image. Other embodiments are also disclosed and claimed.

## Description

### FIELD OF THE INVENTION

Embodiments of the present invention generally relate to the field of video processing, and, more particularly to object recognition using global similarity-based classifier.

### BACKGROUND OF THE INVENTION

Object recognition generally involves representing a test image numerical and then comparing or classifying that test image with exemplar images stored during a training phase to try and identify the test image. Many classifiers require the representation to be fixed-length vectors of numbers, however the geometry of an object is difficult to encode as a fixed-length vector.

### BRIEF DESCRIPTION OF THE DRAWINGS

The present invention is illustrated by way of example and not limitation in the figures of the accompanying drawings in which like references indicate similar elements, and in which:
**FIG. 1** is a graphical illustration of an example device, in accordance with one example embodiment of the invention;
**FIG. 2** is a block diagram of an example electronic appliance suitable for implementing disclosed methods, in accordance with one example embodiment of the invention;
**FIG. 3** is a flow chart of an example method for object recognition using global similarity-based classifier, in accordance with one example embodiment of the invention; and
**FIG. 4** is a block diagram of an example article of manufacture including content which, when accessed by a device, causes the device to implement one or more aspects of one or more embodiment(s) of the invention.

### DETAILED DESCRIPTION

In the following description, for purposes of explanation, numerous specific details are set forth in order to provide a thorough understanding of the invention, It will be apparent, however, to one skilled in the art that embodiments of the invention can be practiced without these specific details. In other instances, structures and devices are shown in block diagram form in order to avoid obscuring the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner in one or more embodiments.

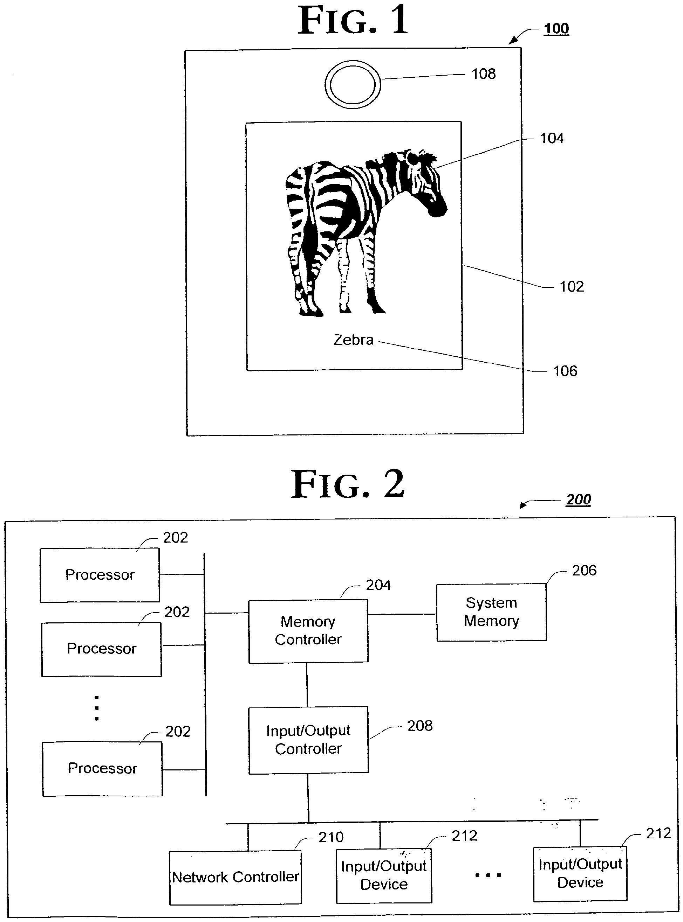

Fig. 1 is a graphical illustration of an example device, in accordance with one example embodiment of the invention. In accordance with the illustrated example embodiment, device 100 may include one or more of display 102, image 104, label 106, and camera 108. While shown as being a mobile handheld device, device 100 may well be a large or stationary device, or any other type of device that would benefit from the teachings of the present invention.

Display 102 may be a liquid crystal display or other display capable of displaying images, such as image 104. Image 104 may be a picture taken by camera 108 or received from another source, for example the internet. Label 106 may be displayed as part of a method of object recognition as described in more detail hereinafter. While camera 108 is intended to represent a standard video or still camera, the benefits of the present invention may applied to other sensors and devices that measure identifiable objects.

Fig. 2 is a block diagram of an example electronic appliance suitable for implementing disclosed methods, in accordance with one example embodiment of the invention. Electronic appliance 200 is intended to represent any of a wide variety of traditional and non-traditional electronic appliances, laptops, desktops, cell phones, wireless communication subscriber units, wireless communication telephony infrastructure elements, personal digital assistants, set-top boxes, or any electric appliance that would benefit from the teachings of the present invention. In accordance with the illustrated example embodiment, electronic appliance 200 may include one or more of processor(s) 202, memory controller 204, system memory 206, input/output controller 208, network controller 210, and input/output device(s) 212 coupled as shown in Fig. 2. In one embodiment, electronic appliance 200 depicts device 100. In another embodiment, electronic appliance 200 networks with device 100.

Processor(s) 202 may represent any of a wide variety of control logic including, but not limited to one or more of a microprocessor, a programmable logic device (PLD), programmable logic array (PLA), application specific integrated circuit (ASIC), a microcontroller, and the like, although the present invention is not limited in this respect. In one embodiment, processors(s) 202 are Intel® compatible processors. Processor(s) 202 may have an instruction set containing a plurality of machine level instructions that may be invoked, for example by an application or operating system.

Memory controller 204 may represent any type of chipset or control logic that interfaces system memory 206 with the other components of electronic appliance 200. In one embodiment, the connection between processor(s) 202 and memory controller 204 may be a point-to-point serial link. In another embodiment, memory controller 204 may be referred to as a north bridge.

System memory 206 may represent any type of memory device(s) used to store data and instructions that may have been or will be used by processor(s) 202. Typically, though the invention is not limited in this respect, system memory 206 will consist of dynamic random access memory (DRAM). In one embodiment, system memory 206 may consist of Rambus DRAM (RDRAM). In another embodiment, system memory 206 may consist of double data rate synchronous DRAM (DDRSDRAM).

Input/output (I/O) controller 208 may represent any type of chipset or control logic that interfaces I/O device(s) 212 with the other components of electronic appliance 200. In one embodiment, I/O controller 208 may be referred to as a south bridge. In another embodiment, I/O controller 208 may comply with the Peripheral Component Interconnect (PCI) Express™ Base Specification, Revision 1.0a, PCI Special Interest Group, released April 15, 2003.

Network controller 210 may represent any type of device that allows electronic appliance 200 to communicate with other electronic appliances or devices. In one embodiment, network controller 210 may comply with a The Institute of Electrical and Electronics Engineers, Inc. (IEEE) 802.11b standard (approved September 16, 1999, supplement to ANSI/IEEE Std 802.11, 1999 Edition). In another embodiment, network controller 210 may be an Ethernet network interface card.

Input/output (I/O) device(s) 212 may represent any type of device, peripheral or component that provides input to or processes output from electronic appliance 200.

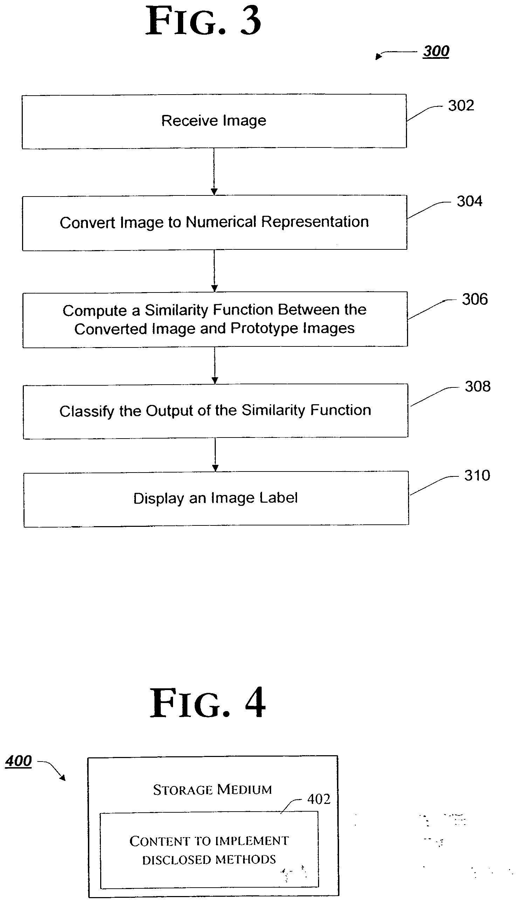

Fig. 3 is a flow chart of an example method for object recognition using; global similarity-based classifier, in accordance with one example embodiment of the invention. It will be readily apparent to those of ordinary skill in the art that although the following operations may be described as a sequential process, many of the operations may in fact be performed in parallel or concurrently. In addition, the order of the operations may be rearranged without departing from the spirit of embodiments of the invention.

In one embodiment, method 300 begins with receiving (302) an image from a camera, for example camera 108. In one example embodiment, electronic appliance receives an image over a network from device 100.

Next is converting (304) the image to a numerical representation. In one embodiment, processor(s) 202 convert the image to color histograms. In another embodiment, processor(s) 202 convert the image to statistics on edge directions or edge contour representations, for example scale invariant feature transform (SIFT) features.

Method 300 continues with computing (306) a similarity function between the converted image and prototype images. In one embodiment, processor(s) 202 compute maximum weight matchings between a test image and prototype images representations. In another embodiment, processor(s) 202 compute Hausdorff distances between a test image and prototype images representations. In one embodiment, for test image x and a set of prototype images X_{I}-Xₚ, the similarity function outputs a set of fixed-length vectors k(x_{I},x) - k(xₚ,x).

Next is classifying (308) the output of the similarity function. In one example embodiment, the classifier is a nearest neighbor classifier. In one embodiment, the classifier is a k-nearest neighbors classifier. In one embodiment, the classifier is a support vector machine classifier. In one embodiment, the classifier is a decision tree classifier. One skilled in the art would recognize that the classifier would not classify the image representation directly, but instead the fixed-length similarity function vectors, allowing for more complexity of image representations. In one embodiment, the classifier is trained only once with prototype image representations.

Then, assuming a match is found among the prototype images, label 106 would be displayed (310) on display 102 for image 104. In other embodiments, object identification information may be conveyed in other ways that would occur to one skilled in the art.

Fig. 4 illustrates a block diagram of an example storage, medium comprising content which, when accessed, causes an electronic appliance to implement one or more aspects of the disclosed method 300. In this regard, storage medium 400 includes content 402 (e.g., instructions, data, or any combination thereof) which, when executed, causes the appliance to implement one or more aspects of methods described above.

The machine-readable (storage) medium 400 may include, but is not limited to, floppy diskettes, optical disks, CD-ROMs, and magneto-optical disks, ROMs, RAMs, EPROMs, EEPROMs, magnet or optical cards, flash memory, or other type of media / machine-readable medium suitable for storing electronic instructions. Moreover, the present invention may also be downloaded as a computer program product, wherein the program may be transferred from a remote computer to a requesting computer by way of data signals embodied in a carrier wave or other propagation medium via a communication link (e.g., a modem, radio or network connection).

In the description above, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form.

Embodiments of the present invention may be used in a variety of applications. Although the present invention is not limited in this respect, the invention disclosed herein may be used in microcontrollers, general-purpose microprocessors, Digital Signal Processors (DSPs), Reduced Instruction-Set Computing (RISC), Complex Instruction-Set Computing (CISC), among other electronic components. However, it should be understood that the scope of the present invention is not limited to these examples.

Embodiments of the present invention may also be included in integrated circuit blocks referred to as core memory, cache memory, or other types of memory that store electronic instructions to be executed by the microprocessor or store data that may be used in arithmetic operations. In general, an embodiment using multistage domino logic in accordance with the claimed subject matter may provide a benefit to microprocessors, and in particular, may be incorporated into an address decoder for a memory device. Note that the embodiments may be integrated into radio systems or hand-held portable devices, especially when devices depend on reduced power consumption. Thus, laptop computers, cellular radiotelephone communication systems, two-way radio communication systems, one-way pagers, two-way pagers, personal communication systems (PCS), personal digital assistants (PDA's), cameras and other products are intended to be included within the scope of the present invention.

The present invention includes various operations. The operations of the present invention may be performed by hardware components, or may be embodied in machine-executable content (e.g., instructions), which may be used to cause a general-purpose or special-purpose processor or logic circuits programmed with the instructions to perform the operations. Alternatively, the operations may be performed by a combination of hardware and software. Moreover, although the invention has been described in the context of a computing appliance, those skilled in the art will appreciate that such functionality may well be embodied in any of number of alternate embodiments such as, for example, integrated within a communication appliance (e.g., a cellular telephone).

Many of the methods are described in their most basic form but operations can be added to or deleted from any of the methods and information can be added or subtracted from any of the described messages without departing from the basic scope of the present invention. Any number of variations of the inventive concept is anticipated within the scope and spirit of the present invention. In this regard, the particular illustrated example embodiments are not provided to limit the invention but merely to illustrate it. Thus, the scope of the present invention is not to be determined by the specific examples provided above but only by the plain language of the following claims.

This disclosure includes all the subject matter recited in the following clauses:
1. An apparatus comprising:
   a camera;
   a display; and
   a processor, the processor to:
      receive an image from the camera;
      convert the image to a numerical representation;
      compute a similarity function between the converted image and a plurality of prototype image representations; and
      classify the output of the similarity function to identify the image.
2. The apparatus of clause 1, further comprising the processor to label the image on the display as being one of the prototype images.
3. The apparatus of clause 1, wherein the processor to compute a similarity function between the converted image and a plurality of prototype image representations comprises the processor to compute maximum weight matchings between sets of SIFT features.
4. The apparatus of clause 1, wherein the processor to compute a similarity function between the converted image and a plurality of prototype image representations comprises the processor to compute Hausdorff distances between edge contour representations.
5. The apparatus of clause 1, wherein the processor to convert the image to a numerical representation comprises the processor to convert the image to color histograms.
6. The apparatus of clause 1, wherein the processor to convert the image to a numerical representation comprises the processor to convert the image to statistics on edge directions.
7. A storage medium comprising content which, when executed by an accessing machine, causes the accessing machine to receive an image from a camera, to convert the image to a numerical representation, to compute a similarity function between the converted image and a plurality of prototype image representations, and to classify the output of the similarity function to identify the image.
8. The storage medium of clause 7, further comprising content to label the image on a display as being one of the prototype images.
9. The storage medium of clause 7, wherein the content to compute a similarity function between the converted image and a plurality of prototype image representations comprises content to compute maximum weight matchings between sets of SIFT features.
10. The storage medium of clause 7, wherein the content to compute a similarity function between the converted image and a plurality of prototype image representations comprises content to compute Hausdorff distances between edge contour representations.
11. The storage medium of clause 7, wherein the content to convert the image to a numerical representation comprises content to convert the image to color histograms.
12. The storage medium of clause 7, wherein the content to convert the image to a numerical representation comprises content to convert the image to statistics on edge directions,
13. An apparatus comprising:
   a camera;
   a display; and
   a processor, the processor to:
      receive an image from the camera;
      convert the image to SIFT features;
      compute maximum weight matchings between sets of SIFT features of the image and a plurality of prototype images; and
      classify a fixed-length vector of the maximum weight matchings to identify the image.
14. The apparatus of clause 13, wherein the processor to perform a classification algorithm comprises the processor to perform a nearest neighbors classifier
15. The apparatus of clause 13, wherein the processor to perform a classification algorithm comprises the processor to perform a k-nearest neighbors classifier.
16. The apparatus of clause 13, wherein the processor to perform a classification algorithm comprises the processor to perform a support vector machine classifier.
17. The apparatus of clause 13, wherein the processor to perform a classification algorithm comprises the processor to perform a decision tree classifier.
18. A storage medium comprising content which, when executed by an accessing machine, causes the accessing machine to receive an image from the camera, to convert the image to SIFT features, to compute maximum weight matchings between sets of SIFT features of the image and a plurality of prototype images, and to classify a fixed-length vector of the maximum weight matchings to identify the image.
19. The storage medium of clause 18, wherein the content to perform a classification algorithm comprises content to perform a nearest neighbors classifier.
20. The storage medium of clause 18, wherein the content to perform a classification algorithm comprises content to perform a k-nearest neighbors classifier.
21. The storage medium of clause 18, wherein the content to perform a classification algorithm comprises content to perform a support vector machine classifier.
22. The storage medium of clause 18, wherein the content to perform a classification algorithm comprises content to perform a decision tree classifier.

## Claims

1. An apparatus comprising:
a camera;
a display; and
a processor, the processor being adapted to:
receive an image from the camera;
convert the image to a numerical representation;
compute a similarity function between the converted image and a plurality of prototype image representations, the similarity function output comprises a set of fixed-length vectors; and
classify the output of the similarity function to identify the image.

2. The apparatus of claim 1, further comprising the processor being adapted to label the image on the display as being one of the prototype images.

3. The apparatus of claim 1, wherein the processor being adapted to compute a similarity function between the converted image and a plurality of prototype image representations comprises the processor being adapted to compute maximum weight matchings between the converted image and a plurality of prototype image representations.

4. The apparatus of claim 1, wherein the processor being adapted to compute a similarity function between the converted image and a plurality of prototype image representations comprises the processor being adapted to compute Hausdorff distances between edge contour representations.

5. The apparatus of claim 1, wherein the processor being adapted to convert the image to a numerical representation comprises the processor being adapted to convert the image to color histograms.

6. The apparatus of claim 1, wherein the processor being adapted to convert the image to a numerical representation comprises the processor being adapted to convert the image to statistics on edge directions.

7. A storage medium comprising content which, when executed by an accessing machine, causes the accessing machine to receive an image from a camera, to convert the image to a numerical representation, to compute a similarity function between the converted image and a plurality of prototype image representations, the similarity function output comprises a set of fixed-length vectors and to classify the output of the similarity function to identify the image.

8. The storage medium of claim 7, further comprising content to label the image on a display as being one of the prototype images.

9. The storage medium of claim 7, wherein the content to compute a similarity function between the converted image and a plurality of prototype image representations comprises content to compute maximum weight matchings between the converted image and a plurality of prototype image representations.

10. The storage medium of claim 7, wherein the content to compute a similarity function between the converted image and a plurality of prototype image representations comprises content to compute Hausdorff distances between edge contour representations.

11. The storage medium of claim 7, wherein the content to convert the image to a numerical representation comprises content to convert the image to color histograms.

12. The storage medium of claim 7, wherein the content to convert the image to a numerical representation comprises content to convert the image to statistics on edge directions.
